# EUROPÄISCHE PATENTSCHRIFT

(11) **EP 0 528 180 B1**
(45) Veröffentlichungstag und Bekanntmachung des Hinweises auf die Patenterteilung: **12.04.1995**
(21) Anmeldenummer: 92112165.3
(22) Anmeldetag: 16.07.1992
(51) Int. Cl.: B29C 45/17, B29C 45/53

(54) **Verfahren zum Herstellen von gummielastischen Teilen aus einem kautschukartigen Material**
Method for making elastomeric parts from a rubber material
Procédé pour fabriquer des pièces en élastomère à partir d'une matière caoutchouteuse

(30) Priorität: 12.08.1991 DE 4126594
(43) Veröffentlichungstag der Anmeldung: 24.02.1993
(73) Patentinhaber: Taskas, Alexandros, D-35390 Giessen (DE)
(72) Erfinder: Taskas, Alexandros, D-35390 Giessen (DE)
(74) Vertreter: Knefel, Siegfried, Dipl.-Math.

(56) Entgegenhaltungen:
- GB-A- 1 260 165
- US-A- 3 860 801

## Beschreibung

Die Erfindung betrifft ein Verfahren zur Herstellung von gummielastischen Teilen aus einem kautschukartigen Material, wie einem Elastomer.

Zum Herstellen von derartigen Gummiteilen, beispielsweise Dichtungen, Dämpfungsteilen, Schlauchstücken, membranartigen Teilen und dergleichen mehr, wird eine plastisch verformbare kautschukartige Masse in einen Zylinder gefüllt, in dem ein Kolben bewegbar ist. Bei der Vorwärtsbewegung des Kolbens wird die Masse aus dem Zylinder durch eine Düse und wenigstens einen Zuführkanal in den Hohlraum der Form eingespritzt. In der Form vulkanisiert das Material, zum Beispiel durch Temperatureinfluß von 140° bis 200° Celsius, so daß sich die Makromoleküle zu einem dreidimensionalen Netzwerk umformen und die Masse gummielastisch wird.

Das so hergestellte "Gummiteil" wird nach Öffnen der Form dieser entnommen.

Bei der Vulkanisation wird nicht nur das Material in der Form vulkanisiert, sondern es vulkanisiert, auch wenigstens teilweise, das im Zuführkanal zwischen Zylinder und Form verbliebene Material und auch das Material in der Zufuhrdüse. Dieses setzt sich sozusagen als Pfropfen in dem Zuführkanal und der Düse fest und bildet an dem inneren Ende häufig sogar eine Wulst. Das vordere mit dem vulkanisierten Teil noch in Verbindung stehende Stück kann beim Lösen dieses Teiles aus der Form abgerissen oder abgeschnitten werden, da es zugänglich ist. Die in den Zylinder reichende Wulst und auch das im Zuführkanal verbliebene vulkanisierte Stück ist jedoch manuell und maschinell ohne besondere Maßnahme nicht erreichbar. Würde man deshalb eine erneute Füllung der Form vornehmen, würde sich dieses verbliebene vulkanisierte Material mit in die Form schieben, wodurch die Homogenität des herzustellenden Gummiteiles gestört würde.

Aus diesem Grunde wird nach dem Stand der Technik vor jedem erneuten Einspritzvorgang des plastischen Materials in die Form der das Material in die Form drückende Kolben von Hand so weit vorwärtsbewegt, daß die nachdrückende plastische Masse den nicht erwünschten Pfropfen aus der Düse und dem Zuführkanal herausdrückt. Da der Pfropfen unkontrollierbar fest in dem Zuführkanal und in der Einspritzdüse sitzt, muß der hierzu notwendige Druck rein gefühlsmäßig aufgebracht werden. Wird hierbei der Kolben zu wenig vorwärtsbewegt, drückt sich der Pfropfen nicht aus. Wird der Kolben zu stark vorwärtsbewegt, was zur Erzielung eines zeitlich schnellen Arbeitsablaufes die Regel ist, fliegt der störende Pfropfen explosionsartig aus der Düse heraus, und es schiebt sich unmittelbar neue Einfüllmasse durch die Düse, und zwar so lange, bis ein Druckausgleich stattgefunden hat. Hierdurch tritt ein erheblicher Verlust an plastischem Material auf, wodurch insgesamt gesehen das Ausspritzen des anvulkanisierten Materials aus dem Zuführkanal und der Düse äußerst materialaufwendig wird. Da die Kautschukmasse darüber hinaus relativ teuer ist, macht sich der durch den Ausspritzvorgang hervorgerufene Materialverlust als wesentliche Verteuerung der hergestellten Gummiteile bemerkbar.

Ein weiterer wesentlicher Nachteil ist der, daß das verlorengehende Material nicht recycelbar ist, weshalb zu seiner Vernichtung umweltschädliche Maßnahmen, wie eine Verbrennung, durchgeführt werden müssen.

Aufgabe der Erfindung ist es, ein Verfahren anzugeben, bei dem der Materialverbrauch beim Ausspritzen des anvulkanisierten Materials (Pfropfens) aus der Düse und dem Zuführkanal extrem kleingehalten werden kann.

Diese Aufgabe wird durch das kennzeichnende Merkmal des Anspruches 1 gelöst.

Es hat sich gezeigt, daß für die Erzielung des notwendigen Druckes im Innern des Zylinder zum Ausdrücken des Gummipfropfens aus der Düse und dem Zuführkanal ein ganz bestimmter Kolbenweg erforderlich ist, der bei gleichen oder denselben Formen zum Ausspritzen der Düse und des Zuführkanals vor oder nach jedem Einspritzvorgang des Materials in die Form verwendet werden kann. Das Verfahren eignet sich deshalb besonders für eine Serienfertigung, wodurch diese vollautomatisch wird.

Die Erfindung sieht deshalb in weiterer Ausgestaltung vor, diesen Kolbenweg, insbesondere zu Beginn einer Serienfertigung, empirisch zu ermitteln, und diesen gefundenen Wert in eine für das Ausspritzen der Düse und des Zuführkanals üblicherweise ohnehin vorgesehene Steuereinrichtung (Computer) einzugeben, die dann auch die Vorwärtsbewegung des Kolbens zum Ausspritzen des anvulkanisierten Materials aus der Düse und dem Zuführkanal steuert.

Weitere Einzelheiten der Erfindung können den Unteransprüchen entnommen werden.

Auf der Zeichnung ist eine Vorrichtung zur Durchführung des erfindungsgemäßen Verfahrens dargestellt, und zwar zeigen:
- Fig. 1: ein erstes Ausführungsbeispiel;
- Fig. 2: ein zweites Ausführungsbeispiel.

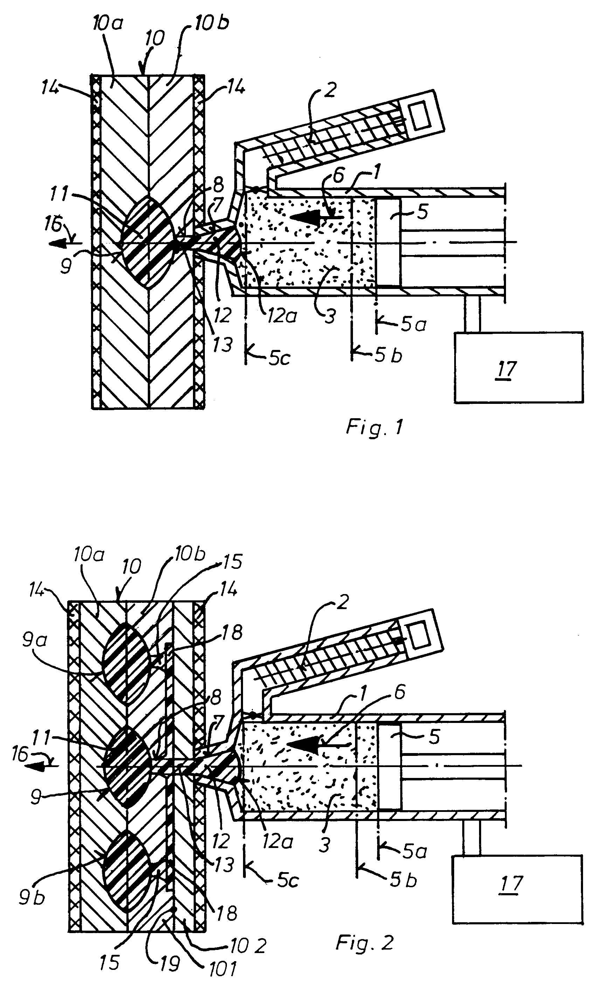

Gemäß Fig. 1 wird in einem Zylinder (1) mit Hilfe einer Schnecke (2) das zerkleinerte kautschukartige Material (3) vor einen im Zylinder (1) bewegbaren Kolben (5) gefüllt. Beim Füllen des Zylinders (1) bewegt sich der Kolben (5) beispielswesise aus der Stellung (5c) in die Stellung (5a) nach hinten (in der Figur nach rechts) zurück. Ist der Zylinder (1) gefüllt, wird der Kolben (5) in Richtung des Pfeiles (6) vorwärtsbewegt, und zwar beispielsweise bis in die Lage (5c). Hierbei drückt der Kolben (5) das Kautschukmaterial (3) durch eine Düse (7) des Zylinders (1) über einen Kanal (8) in ein Kaliber (9) einer Form (10). Die Form (10) besteht aus zwei Hälften (10a, 10b). Die Form (10) wird anschließend zum Beispiel mittels Heizplatten (14) auf 140° bis 200° Celsius erhitzt, so daß das gummiartige Material beispielsweise zu einem Gummiball (11) vulkanisiert.

Bei der Vulkanisation bildet sich im Zuführkanal (8) und in der Düse (7) ebenfalls gummiartiges Material, das als Pfropf im Kanal (8) und in der Düse (7) festsitzt und als Wulst (12a) bis in den Zylinderraum reichen kann.

Der bei der Vulkanisation zwischen Düse (7) und Gummiball (11) entstehende Nippel (13) kann beim Entleeren der Form abgerissen oder abgeschnitten werden, da die Form hierzu geteilt wird. Für den verbleibenden Gummipfropf (12) mit seiner Wulst (12a) im Innern des Zylinders ist ein Abschneiden oder Abreißen jedoch nicht möglich.

Vor dem nächsten Einspritzvorgang müssen deshalb die Düse (7) und der Zuführkanal (8) gereinigt werden. Dies geschieht, indem der Kolben (5) zunächst in die Stellung (5a), unter Einfüllung neuen Materiales in den Zylinder (1) zurückbewegt wird und von hier aus wiederum vorwärts, und zwar gemäß der Erfindung gesteuert bis in die Lage (5b). Hierbei baut sich im Innern des Zylinders (1) ein Druck auf, der den Gummipfropf (12) samt Wulst (12a) aus der Düse (7) in Richtung des Pfeiles (16) herausdrückt. Der Kolbenweg zwischen den Endstellungen (5a und 5b) ist derart gewählt, daß nur der Gummipfropf (12, 12a) durch die Düse (7) und den Zuführkanal (8) gedrückt wird und kein oder nur wenig weiteres Material (3).

Sind die Düse (7) und der Zuführkanal (8) gesäubert, wird der Kolben (5) in die Ausgangslage (5a) zurückbewegt und der Zylinder (1) erneut mit Kautschukmasse aufgefüllt. Anschließend findet durch Verschieben des Kolbens (5) bis in die Stellung (5c) wiederum eine Füllung der Form statt.

Die Kolbenbewegung wird durch eine Meß- und Steuervorrichtung (17) ausgelöst und kontrolliert.

Wie in der Figur 2 dargestellt ist, kann sich der Zuführkanal (8) in Verteilerkanäle (18) verzweigen, so daß gleichzeitig mehrere Kaliber (9, 9a, 9b) gefüllt werden können. Bei dieser Ausführung ist der Formteil (10b) in die Teile (101, 102) unterteilt, deren Berührungsfläche (19) die Verteilerkanäle (18) freilegt. Die in den Verteilerkanälen (18) verbleibenden anvulkanisierten Reste können wieder mechanisch entfernt werden. Das im Kanal (8) und in der Düse (7) verbleibende anvulkanisierte Material wird, wie unter Fig. 1 beschrieben, entfernt.

### Bezugszahlen

- 1: Zylinder
- 2: Schnecke
- 3: kautschukartiges Material
- 5: Kolben
- 5a, 5b, 5c,: Kolbenstellungen
- 6: Pfeil
- 7: Düse
- 8: Kanal
- 9: Kaliber
- 9a, 9b: Kaliber
- 10: Form
- 10a, 10b: Formteile
- 11: Gummiball
- 12: Pfropf
- 12a: Wulst
- 13: Nippel
- 14: Heizplatte
- 15: Pfropf
- 16: Pfeil
- 17: Meß- und Steuereinrichtung
- 18: Verteilerkanäle
- 19: Berührungsfläche
- 101, 102: Formteile

## Patentansprüche

1. Verfahren zum Herstellen von gummielastischen Teilen aus einem kautschukartigen Material, das als plastisches Material mit Hilfe eines in einem Zylinder bewegbaren Kolbens über wenigstens eine Düse und einen Zuführkanal in eine Form gespritzt und dort zu einem elastischen Material vulkanisiert wird und bei dem die Einspritzdüse und der Zuführkanal in der Form vor jedem erneuten Spritzvorgang zwecks Reinigung ausgespritzt wird,
**dadurch gekennzeichnet,** daß zum Ausspritzen des anvulkanisierten Materials in der Düse und im Zuführkanal der das plastische Material durch die Düse und den Zuführkanal drückende Kolben unter Zufuhr neuen kautschukartigen Materials um ein vorherbestimmtes Wegstück vorwärtsbewegt wird.

2. Verfahren nach Anspruch 1, dadurch gekennzeichnet, daß die Kolbenbewegung zum Ausspritzen des anvulkanisierten Materials in der Düse und in dem Zuführkanal elektrisch oder elektronisch gesteuert wird.

3. Verfahren nach Anspruch 2, dadurch gekennzeichnet, daß die Kolbenbewegung computergesteuert erfolgt.

4. Verfahren nach Anspruch 2, dadurch gekennzeichnet, daß die Kolbenbewegung mittels Endschalter gesteuert wird.

5. Verfahren nach Anspruch 1, dadurch gekennzeichnet, daß die Größe der Kolbenbewegung in Abhängigkeit von der verwendeten Form empirisch ermittelt wird.

6. Verfahren nach Anspruch 1, bei dem der Zylinder mit dem kautschukartigen Material gesteuert gefüllt wird und der Kolben zum Einspritzen des Materials in die Form gesteuert vorwärtsbewegt wird, und bei dem zum anschließenden Ausspritzen des anvulkanisierten Materials der Kolben nach jedem Einspritzvorgang von Hand vorwärtsbewegt wird, dadurch gekennzeichnet, daß der Kolben sowohl zum Einspritzen des Materials in die Form, als auch zum Ausspritzen des anvulkanisierten Materials aus der Düse und aus dem Zuführkanal um vorherbestimmte Wege vorwärtsbewegt wird.

7. Verfahren nach Anspruch 6 zur Serienfertigung von gummielastischen Teilen, dadurch gekennzeichnet, daß die stufenweise Bewegung des Kolbens für jeden Arbeitsgang wiederholt wird.

8. Verfahren nach Anspruch 1, bei dem mehrere Zuführkanäle und gegebenenfalls mehrere Düsen gleichzeitig für das Einspritzen von Material in die Form verwendet werden, dadurch gekennzeichnet, daß das Ausspritzen des anvulkanisierten Materials für sämtliche Düsen und Zuführkanäle gleichzeitig erfolgt.

## Claims

1. Process for making elastomeric parts from a rubber-like material which is injected as plastic material by means of a piston movable in a cylinder via at least one nozzle and one feed channel into a mould and is vulcanized there into an elastic material and with which the material in the injection nozzle and the feed channel in the form is ejected before each new injection operation for the purpose of cleaning, **characterized in that** for ejection of the pre-vulcanized material in the nozzle and in the feed channel the piston forcing the plastic material through the nozzle and the feed channel is moved forward by a preset increment while new rubber-like material is being fed in.

2. Process according to claim 1, characterized in that the piston movement for ejecting the pre-vulcanized material in the nozzle and in the feed channel is controlled electrically or electronically.

3. Process according to claim 2, characterized in that the piston movement is computer-controlled.

4. Process according to claim 2, characterized in that the piston movement is controlled by limit switches.

5. Process according to claim 1, characterized in that the size of the piston movement is determined empirically in dependence on the used mould.

6. Process according to claim 1, in which the cylinder is filled under control with the rubber-like material and the piston is moved forward under control for injecting the material into the mould, and in which the piston is moved forward by hand after each injection operation for subsequent ejection of the pre-vulcanized material, characterized in that the piston is moved forward by preset increments both for injection of the material into the mould and for ejection of the pre-vulcanized material from the nozzle and from the feed channel.

7. Process according to claim 6 for series production of elastomeric parts, characterized in that the stepwise movement of the piston is repeated for each working cycle.

8. Process according to claim 1, in which several feed channels and where appropriate several nozzles are used simultaneously for the injection of material into the mould, characterized in that the ejection of the pre-vulcanized material is executed simultaneously for all nozzles and feed channels.

## Revendications

1. Procédé pour fabriquer des pièces présentant l'élasticité du caoutchouc et constituées par une matière caoutchouteuse, que l'on introduit par injection, en tant que matière plastique, dans un moule à l'aide d'un piston déplaçable dans un cylindre et par l'intermédiaire d'au moins une buse et d'un canal d'amenée, et qui est vulcanisée dans ce moule pour former une matière élastique et selon lequel lors de chaque nouvelle opération de moulage par injection, on éjecte du moule la buse d'injection et dans le canal d'amenée, en vue de leur nettoyage, caractérisé en ce que pour l'éjection de la matière, qui a commencé à être vulcanisée, située dans la buse et dans le canal d'amenée, on fait avancer sur une distance prédéterminée le piston, qui repousse la matière plastique à travers la buse et le canal d'amenée, tout en introduisant une nouvelle matière caoutchouteuse.

2. Procédé selon la revendication 1, caractérisé en ce que le déplacement du piston pour l'éjection de la matière, qui a commencé à être vulcanisée, située dans la buse et dans le canal d'amenée est commandé électriquement ou électroniquement.

3. Procédé selon la revendication 2, caractérisé en ce que le déplacement du piston s'effectue d'une manière commandée par ordinateur.

4. Procédé selon la revendication 2, caractérisé en ce que le déplacement du piston est commandé par un interrupteur de fin de course.

5. Procédé selon la revendication 1, caractérisé en ce que la valeur du déplacement du piston est déterminée empiriquement en fonction du moule utilisé.

6. Procédé selon la revendication 1, selon lequel on remplit, d'une manière commandée, le cylindre avec la matière caoutchoutée et on fait avancer d'une manière commandée le piston pour l'injection de la matière dans le moule, et selon lequel pour éjecter ensuite la matière, qui a commencé à être vulcanisée, on fait avancer le piston manuellement après chaque opération de moulage par injection, caractérisé en ce qu'on fait avancer le piston sur une distance prédéterminée aussi bien pour l'injection de la matière dans le moule que pour l'éjection de la matière, qui a commencé à être vulcanisée, hors de la buse et du canal d'amenée.

7. Procédé selon la revendication 6 pour la fabrication de pièces présentant l'élasticité du caoutchouc, caractérisé en ce qu'on répète le déplacement échelonné du piston lors de chaque phase de travail.

8. Procédé selon la revendication 1, selon lequel on utilise simultanément plusieurs canaux d'amenée et éventuellement plusieurs buses pour l'injection de matière dans le moule, caractérisé en ce que l'éjection de la matière, qui a commencé à être vulcanisée s'effectue simultanément pour toutes les buses et pour tous les canaux d'amenée.
